# EUROPEAN PATENT SPECIFICATION

(11) **EP 2 057 240 B1**
(45) Date of publication and mention of the grant of the patent: **07.12.2011**
(21) Application number: 07837570.6
(22) Date of filing: 30.08.2007
(51) Int. Cl.: C09J 7/02, C09J 183/08

(54) **LAMINATES UTILIZING SILICONE PRESSURE SENSITIVE ADHESIVE COMPOSITION AND CONVENTIONAL SILICONE LINERS**
LAMINATE MIT DRUCKEMPFINDLICHER SILIKONKLEBERZUSAMMENSETZUNG UND HERKÖMMLICHEN SILIKONSCHICHTEN
LAMINÉS UTILISANT UNE COMPOSITION AUTO-ADHÉSIVE ET DES REVÊTEMENTS SILICONÉS CONVENTIONNELS

(30) Priority: 01.09.2006 US 515445
(43) Date of publication of application: 13.05.2009
(73) Proprietor: Momentive Performance Materials Inc., Wilton CT 06897-4122 (US)
(72) Inventor: GRISWOLD, Roy, M., Ballston Spa, NY 12020 (US); FRYE, Robert, L., Concord, OH 44077 (US); ECKBERG, Richard, P., Hillsborough, North Carolina 27278 (US)
(74) Representative: Laufhütte, Dieter
(86) International application number: PCT/US2007/019118
(87) International publication number: WO 2008/027498

(56) References cited:
- EP-A- 0 552 917
- WO-A-2006/110439
- US-B1- 6 521 309

## Description

This invention relates to laminates, which employ pressure sensitive adhesives. More particularly, this invention relates to laminates that employ pressure sensitive adhesives for use with conventional silicone release coatings.

### BACKGROUND OF THE INVENTION

Silicone-based pressure sensitive adhesive (PSA) compositions are well-known materials and are widely used where good adhesive properties over a wide operating temperature range are required such as a label on the cylinder wall of an internal combustion engine or on an internal wall of a freezer compartment. These compositions are typically provided as blends of high molecular weight linear polydimethyl siloxane gums endcapped by silanol groups and tackifying, usually partially hydrolyzed, MQ resins derived, e.g., from the hydrolysis of trialkylchlorosilanes with tetraalkyl orthosilicates and/or aqueous dispersions of sodium silicate. For example, EP 0 552 917 A discloses laminates comprising a substrate and a pressure-sensitive adhesive composition comprising a fluorosilicone gum, and a silanol-containing MQ resin. US 6,521,309 B1 discloses laminates comprising a substrate, a pressure-sensitive adhesive layer, and a fluorosilicone release liner facing the silicone pressure-sensitive adhesive layer.

A frequent variation in these compositions is the use of linear silicone gum bearing diphenylsiloxane or methylphenylsiloxane in place of some dimethylsiloxane. Because of the high molecular weight of both the silicone gum and the MQ tackifying resin, it is necessary that silicone-based PSAs be packaged and applied as solutions in aromatic or aliphatic hydrocarbon solvents. Silicone-based PSAs are normally cured (crosslinked) to improve adhesive properties by the addition of heat-activated organic peroxide curing catalysts, benzoyl peroxide (BPO) being commonly used for this purpose.

Silicone pressure sensitive adhesives (PSA) consisting of linear polydimethyl siloxane (PDMS) gums plus methyl MQ resin tackifying agents are well known to those skilled in the art. Such materials are particularly useful in specialty applications such as adhesion of a label to a substrate over a wide range of operating temperature, or other applications where conventional organic PSA's do not meet required performance. The broad pressure sensitive adhesive market is served by laminations of labels or other facestock to adhesives that are attached to release coatings on backing materials commonly called liners. The liner provides a convenient vehicle permitting production of a label, tag, or tape well before its use and at a great distance from where the label is applied. Most organic PSA's will lightly adhere to a silicone release liner but are easily detached and applied at time of use. Silicone PSA's have not been packaged in this fashion, because conventional silicone adhesives do not release from most silicone release agents.

Prior art technology developed to overcome this undesirable feature of silicone adhesives has focused on modification of the silicone release coating. For example, silicone coatings that incorporate a high concentration of perfluoroalkyl groups in their structure are known to release conventional PDMS silicone adhesives. Such release coatings can be depicted as M-D*ₙ-Dₘ -M type polymers, where D* is (CH₃)(CF₃(CF₂)_{X}CH₂CH₂)SiO- and x > 2. Such materials are very expensive and thus are not in common use. A special class of silicone coatings known as 'T-branched' coatings bearing significant numbers of CF₃CH₂CH₂- groups can release certain so-called phenyl silicone PSA's, but not conventional methyl silicone PSA's. Again, the cost and limited applicability of this system has prevented its widespread use for pressure sensitive products.

Therefore, a need exists for silicone-based pressure sensitive adhesive (PSA) compositions that will lightly adhere to conventional silicone release liners and are easily detached and applied at time of use which are economical and practical.
An improvement was found in WO 2006/110439 A1, which discloses a laminate comprising a paper face stock and a pressure-sensitive adhesive layer comprising a fluorosilicone gum and a fluoroalkylsilylated MQ resin.

### SUMMARY OF THE INVENTION

A laminate comprising a facestock possessing a pressure sensitive adhesive layer comprising:
i) fluorosilicone gum;
ii) fluoromalkylsilylated MQ resin; and, optionally,
   at least one additional component selected from the group consisting of filler, silane adhesion promoter, plasticizer, solvent, thixotropic agent, U.V. stabilizer, curing catalyst and antioxidant; wherein said pressure sensitive adhesive is releasably adhered to a release liner possessing a silicone release coating, wherein the face stock is at least one selected, from the group consisting of polyimide, polyester, polyvinylchloride and polyolefin.

The laminate of the present invention employs a silicone pressure sensitive adhesive that can be used with conventional silicone liners and/or release coatings to produce functional and efficient multi-layer articles or pressure-sensitive products, e.g., labels, decals, tapes, and the like.

### DETAILED DESCRIPTION OF THE INVENTION

Laminates, as broadly defined herein, are composites that can be made from any one of several types of thermosetting plastic, e.g., phenolic, polyester, epoxy, or silicone, bonded to paper cloth, asbestos, wood, glass etc.

By "releasably adhered" it is meant that the adhered pressure sensitive adhesive layer will remain adhered to the release liner until it is to be removed, and can then be removed so as to expose the silicone release coating preferably without tearing the pressure sensitive adhesive film and/or separating the pressure sensitive adhesive film from facestock to which it is durably adhered. By "durably adhered" it is meant that a material, such as an adhesive, a coating or a surface treatment, that is adhered to a substrate, e.g., facestock, will remain adhered to the substrate during the normal use of the material and, if removable, can only be removed from the substrate by damaging the material and/or the substrate.

In one embodiment of the present invention, laminates or pressure sensitive products are disclosed and comprise (a) a facestock, e.g., label; (b) a release liner possessing a silicone release coating composition that has been cured; (c) a layer comprising a pressure-sensitive adhesive composition, wherein the silicone release coating is interposed between the release liner and the layer of pressure-sensitive adhesive and is preferentially adherent to the release liner, and the pressure-sensitive adhesive layer (c) is releasably interposed between the silicone release coating and the facestock and is preferentially adherent to the facestock. Additional layers can be interdispersed between the facestock and the layer of pressure-sensitive adhesive and between the release liner and the silicone release coating using conventional techniques to provide additional desirable properties such as increased strength, increased dimensional stability, etc.

The release liner can be any of the conventional silicone liners known in the art for releasing organic pressure sensitive adhesives (PSA). Typically, a release liner comprises a flexible backing having at least one surface thereof treated, e.g., with a silicone release coating, to provide a low surface energy for the surface.

The pressure sensitive adhesive composition can be applied to the appropriate facestock, release liner or tape backing by a wide range of processes, including, solution coating, solution spraying, hot melt coating, extrusion, coextrusion, lamination, pattern coating, etc., to make the adhesive laminates of the present invention. Typically, it is applied to a substrate, e.g., release liner, such as polyethylene terephthalate coated with a silicone release material to form an adhesive/release liner laminate. The liner can have a microstructure on its surface that is imparted to the adhesive to form a microstructure on the adhesive surface. In the case of an adhesive transfer tape, it can be used as is or can be applied, e.g., laminated, to at least one side of a desired substrate, such as biaxially oriented polyethylene or high density polyethylene, to form an adhesive tape. When laminated onto only one side of a substrate, e.g., a backing film or a foam substrate, a single sided tape can be produced. When laminated onto both sides of a substrate, e.g., a film or a foam, a double-sided tape can be produced. Additionally, in the case of a double-sided tape, the tape can have the same or different adhesive on its sides, e.g., one adhesive may be a pressure sensitive adhesive, the other, a heat activated adhesive, or one adhesive is silicone based and the other is acrylic based.

Suitable backings for use in the adhesive articles of the present invention can include a wide range of substrate materials, examples being polymer films such as polyimide, polyethylene, polyethylene terephthalate (PET), biaxially oriented polypropylene (BOPP), and metallocene-polymerized poly(alpha-olefin) copolymers, foams, cloth, paper, treated paper, woven and nonwoven scrims, netting, mesh, and the like. Any suitable methods can be used to coat release liners. Typical release coating weights are greater than about 0.2 g/m² and more typically are from about 0.7 g/m² to about 1.9 g/m². Additives such as for example, fillers, antioxidants, viscosity modifiers, pigments, release modifiers can be added to the release coatings to the extent that they do not alter the desired properties of the final product.

The laminated adhesive articles of the invention are tapes or labels that may contain additional layers such as primers, barrier coatings, metal and/or reflective layers, tie layers, and combinations thereof. Priming of the layer(s) may include a priming step such as chemical or mechanical priming. An example of a useful chemical primer is a solvent solution of acrylonitrile butadiene rubber, epoxy resin, and polyamide resin.

The laminates of the invention may be exposed to post processing steps such as die cutting, heating to cause expansion of the article, e.g., foam-in-place, and the like.

Examples of polymer films used for making release liners include Polyolefin, polyester, polyvinyl chloride, polyvinyl fluoride (PVF), polyvinylidene difluoride (PVDF), etc., and combinations thereof. The polyolefin films may comprise polymer and copolymers of monoolefins having from 2 to about 12 carbon atoms, and in one embodiment from 2 to about 8 carbon atoms, and in one embodiment 2 to about 4 carbon atoms per molecule. Examples of such homopolymers include polyethylene, polypropylene, poly-1-butene, etc. The examples of copolymers within the above definition include copolymers of ethylene with from about 1% to about 10% by weight of propylene, copolymers of propylene with about 1% to about 10% by weight of ethylene or 1-butene, etc. Films prepared from blends of copolymers or blends of copolymers with homopolymers also are useful. The polymer films may be extruded in mono or multilayers. Another type of material which can be used as the substrate is a polycoated kraft liner which is basically comprised of a kraft liner that is coated on either one or both sides with a polymer coating.

### Silicone Release Coating

The major components of the silicone release coating compositions of the present invention are polyorganosiloxanes and, in one embodiment, the major components are polydimethylsiloxanes. The silicone release coating compositions used in this invention may be moisture cured, thermally cured, or radiation cured. Generally, the moisture curable and thermally curable compositions comprise at least one polyorganosiloxane and at least one catalyst (or curing agent) for such polyorganosiloxane(s). Such compositions may also contain at least one cure accelerator and/or adhesivity promoter (sometimes referred to as an anchorage additive). As is known in the art, some materials have the capability of performing both functions, i.e., the capability of acting as a cure accelerator to increase the rate, reduce the curing temperature, etc., and also as an adhesivity promoter to improve bonding of the silicone composition to the substrate. The use of such multifunctional additives where appropriate is within the purview of the invention.

A wide variety of polyorganosiloxanes, which are sometimes referred to as silicones, can be used in the practice of the invention. Such polyorganosiloxanes are also sometimes referred to as polymeric silicone resins, rubbers, oils or fluids. These compositions are well known and fully described in the literature. These compositions are comprised essentially of silicon atoms connected to each other by oxygen atoms through silicon oxygen linkages. The compositions used in the practice of the invention include polymers and copolymers having molecular weights in the range of about 5,000 to about 250,000. These polymers and copolymers should not have obtained such a degree of polymerization or condensation that they are no longer soluble in common hydrocarbon solvents such as xylene, toluene, methyl ethyl ketone, and carbon tetrachloride. In general, any organic solvent having a boiling point equal to or less than that of xylene can be used in the compositions used in the practice of the invention. The solvent merely serves as a convenient vehicle or carrier for uniform application to the substrate. Thus, higher boiling solvents can be used but require so much time for their control that their use is not commercially economical. Various polyorganosiloxanes are commercially available in organic solvents in various percent solids concentration. Exemplary of the polyorganosiloxane materials which can be used in forming the silicone release coating compositions of the invention are those disclosed in U.S. Patent Nos. 2,258,218; 2,258,220; 2,258,222; 2,494,920; 3,432,333; and 3,518,325

Suitable catalysts which can be employed in the curing of the silicone release coating compositions include various compounds containing metals such as tin, lead, platinum, rhodium, etc. Generally, the catalysts are tin, platinum or rhodium compounds such as the dialkyl tin esters. Specific examples of catalysts include: dibutyl tin diacetate, dibutyl tin di-ethylhexanoate, dihexyl tin di-2-ethyl hexanoate, ethyl tin trihexanoate, dibutyl tin dilaurate, octadecyl tin dilaurate, dibutyl tin diacetate, tri-butyl tin acetate, dibutyl tin succinate, various lead salts such as lead naphthenate and lead octoate, zinc octoate, zinc stearate, iron octoate, various organic peroxides such as benzoyl peroxide and 2,4-dichlorobenzoyl peroxide, and others well known in the art as curing agents or catalysts for polyorganosiloxane (silicone) materials. Useful catalysts include the carboxylic acid salts of organotin compounds containing at least one carbontin bond such as those previously mentioned. Metal complexes of platinum and rhodium are also useful. A particularly useful form of chloroplatinic acid is that composition obtained when it is reacted with an aliphatically unsaturated organosilicon compound such as divinyltetramethyldisiloxane, as disclosed by U.S. Patent No. 3,419,593. Amines and amines derivatives such as diethylene triamine, triethylene tetramine and ethanol amine, as well as amine precursors such as the isocyanate compounds and amine-functional silanes such as gamma-aminopmpyl triethoxy silane can also be used as curing catalysts. Amine salts of carboxylic acids can also be used. In one embodiment, the catalyst is a platinum metal complex.

The cure accelerators and/or adhesivity promoters that can be used in the silicone release coating compositions are also well known in the art. Exemplary of such cure accelerators and/or adhesivity promoters are amines, amine-functional silanes and amine precursors previously discussed as well as other silane derivatives such as acetoxy-functional silanes of the type vinyl and orthosilicates such as tetra(diethylene glycol monomethyl ether) silane. Isocyanate compounds that have been found to be effective in the practice of the invention include any isocyanate which is soluble in organic solvents and which has an average of at least two isocyanate groups per molecule.

At least some of these compounds also function as curing catalysts per se as well as cure accelerators and/or adhesivity promoters. The amount of curing agent or catalyst, cure accelerator and/or adhesivity promoter employed in the silicone release coatings of the invention can be varied widely depending upon the curing temperature, the particular catalyst used, the particular polyorganosiloxane materials selected, the particular cure accelerator and/or adhesivity promoter used, the substrate, desired curing time, etc. Usually the amount of any of such components will be in the range of 0.5 to 20 weight percent of the silicone material employed.

Curing of the polyorganosiloxane release coating material can take place at room temperature depending upon the particular silicone material used and the particular curing agent or catalyst used in conjunction with said silicone material.

The radiation-curable silicone release compositions that are useful can be cured by ultraviolet or electron beam radiation with or without the assistance of a photoinitiator such as benzophenone. One type of polyorganosiloxane which is useful in preparing radiation-curable release coatings contains acryloxy groups, methacryloxy groups, or combinations thereof. A variety of acryloxy or methacryloxy containing polyorganosiloxanes are known and can be used. These polyorganosiloxanes are typically fluids which have viscosities in the range of from about 0.025 Pa·s to 10 Pa·s (about 25 cps to 10,000 cps.) Polyorganosiloxanes of this type are described in U.S. Patent Nos. 3,878,263; 4,064,286; 4,301,268; 4,306,050; 4,908,274; 4,963,438; 4,978,726; and 5,034,491

The radiation-curable release compositions that are useful with the present invention optionally may contain at least one photoinitiator. The amount of photoinitiator included in the release compositions may range from about 0% to about 10%, more often from about 0.5% to about 5% based on the total weight of the radiation-curable composition.

The silicone release coating compositions that are useful can be in the form of solutions in organic solvents or emulsions in water, or they can be in neat form (solventless) when the silicone composition is a liquid. The silicone releasse coating compositions of the present invention can be applied to a substrate by known and conventional means.

### Pressure Sensitive Adhesive Composition

Siloxane resins are known in the art. These resins, generally referred to as MQ resins, are soluble in aromatic solvents and contain M units, represented by the formula R₃SiO_{1/2}, and Q units, represented by the formula SiO_{4/2}. It is recognized that while MQ resins are primarily made up of M and Q units, there can be up to 5 mole percent D units, represented by the formula R₂SiO, and T units, represented by the formula RSiO_{3/2}. R is a monovalent hydrocarbon group and includes groups having from 1 to 6 carbon atoms, e.g., alkyl groups such as methyl, ethyl, and isopropyl; alkenyl radicals such as vinyl, allyl, ethylenyl, propenyl and hexenyl; and, cycloaliphatic groups such as cyclopentyl and cyclohexyl. R is advantageously methyl. The MQ resin is preferably a silanol-containing MQ resin having an M to Q ratio of from about 0.6:1 to about 1.2:1. The silicon-bonded hydroxyl group, or silanol, content of the MQ resin can range from about 0.2% to about 5%, advantageously from about 1% to about 3%, and better yet, from about 1.5% to about 2.5%, by weight of the total amount of MQ resin.

MQ resins are commercially available dissolved in an aromatic solvent such as xylene or toluene, generally as a 40 to 60 wt. % solution.

Fluoroalkylsilylation of the MQ resin is achieved by reacting the MQ resin with a fluoroalkylsilane possessing at least one hydrolyzable alkoxy or a halogen group.

Suitable fluoroallrylsilylation reaction conditions include the use of an aromatic solvent such as xylene or toluene, temperatures on the order of from about 50° to about 150°C, and advantageously from about 80°C to about 120°C, ambient pressure (although moderate levels of subatmospheric or superatmospheric pressure may be utilized), for periods of from about 30 minutes to about 6 hours, and advantageously from about 1 to about 2 hours or until the reaction is substantially complete.

Among the suitable fluomalkylsilane reactants are those represented by the general formula: 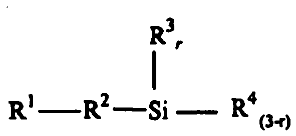 wherein R¹ is a partly or totally fluorinated alkyl group of up to 26 carbon atoms and advantageously possess from 1 to 20 carbon atoms; R² is a chemically stable divalent bridging group linking fluoroalkyl group R¹ with the Si, e.g., the group -(CH₂)*ₙ*- in which *n* is 2 to 20, the group -(CH₂)*ₙ*-X-<CH₂)ₚ- in which -X- is -O- or -C(O)O-, *n* is 0 to 2 and *p* is 5 to 25, or the group -Q-S-(CH₂)_{q}- in which Q is a divalent group containing at least one oxygen atom and *q* is 2 or 3; and R³ is alkyl of from 1 to 6 carbon atoms or aryl of from 6 to 8 carbon atoms, R⁴ is alkoxy or halogen, and *r* is 0, 1 or 2.

Illustrative of such fluoroalkylsilanes are 3,3,3-trifluoropropyltrimethoxy-silane, 3,3,3-trifluoropropyltriethoxysilane, 3,3,3-trifluoropropylmethyldimethoxysilane, 3,3,3-trifluoropropyldimethytmethoxysilane, 4,4,4-trifluorobutyltrimethoxysilane, 4,4,4-trifluorobutyltriethoxysilane, 3,3,4,4,4-pentafluorobutyltrimethoxysilane, 3,3,4,4,4-pentafluorobutyltriethoxysilane, 3,3,4,4,5,5,6,6,7,7,8,8,8-tridecafluorooctyltrimethoxy-silane, 3,3,4,4,5,5,6,6,7,7,8,8,8-tridecafluorooctyltriethoxysilane, 3,3,4,4,5,5,6,6,7,7,8,8; 9,9,10,10,10-heptadecafluorodecyltrimethoxysilane, 3,3,4,4,5,5,6,6,7,7,8,8,9,9,10,10,10-heptadecafluorodecyltriethoxysilane, 15-(trifluoroethoxy)pentadecylaimethoxysilane, 15-(trifluoroacetoxy)pentadecylmethyldiethoxysilane, 3,3,3-trifluoropropyldimethylchloro-silane, 3,3,3-trifluoropropylmethyldichlorosilane, 3,3,3-trifluorpropyltrichlorusilane, and the like. These and other fluoroalkylsilanes can be prepared by processes known in the art, e.g., as disclosed in U.S. Patent Nos. 4,633,004, 5,011,963, 5,202,452 and 6,323,356,

The fluoroalkylsilylated MQ tackifier resin herein is combined with a silicone gum and, optionally, one or more known or conventional adhesive additives such as fillers, silane adhesion promoters, plasticizers, solvents, thixotropic agents, U.V. stabilizers, antioxidants, and the like, to provide a solvent-resistant pressure sensitive adhesive composition in accordance with this invention.

The silicone gum is typically a silanol-stopped polydimethylsiloxane, e.g., any of those disclosed in U.S. Patent No. 5,602,214, and advantageously is a fluorosilicone polymer, e.g., any of those disclosed in U.S. Patent No. 5,436,303, The term "fluorosilicone" refers to a polydimethylsiloxane in which some or all of the dimethylsiloxane units comprising the polymer are replaced by fluoroalkyl-methyl siloxane units. Fluorosilicone gums also possess increased solvent-resistance and have been found to exhibit good compatibility with the fluoroalkylsilylated MQ tackifier resins herein. The solvent-resistant properties of the fluorosilicones are obtained by the use of starting materials containing fluorosilicone homopolymers or copolymers of monomeric units such as SiR¹R²O, also known as D; SiR¹R*^{F}*O, also known as D*^{F}*, SiR¹R³, also known as D*^{R}*; SiR¹₂ R²O_{1/2}, also known as M or M" when alkenyl such as vinyl is present; and, SiR¹R²R*^{F}*O, also known as M*^{F}*. In these monomeric units, R¹ and R² each, independently, is selected from alkyl groups having from 1 to 10 carbon atoms such as methyl, ethyl, propyl, butyl, pentyl, hexyl, and the like, alkenyl groups having from 1 to 10 carbon atoms such as vinyl, allyl, propenyl, or hexenyl, and the like, and aryl groups such as phenyl and arylalkyl having from 6 to 10 carbon atoms. R³ is a silicon-containing pendent group of the general formula -OSiR¹R²R*^{F}* where R¹, R² and R*^{F}* are as previously described.

Fluorosilicone gums and/or fluids of high viscosity, preferably of at least about 5000 cps at 25° C., are especially advantageous for combination with the fluoroalkylsilylated MQ tackifier resins herein. The fluorosilicone structures are high molecular weight gums or fluids containing silicone bonded organics including alkyls, aryls and arylalryls, e.g., methyls and phenyls, and moieties including: trifluoroalkyls having 1 to 8 carbon atoms; fluorocyclics having 1 to 8 carbon atoms; perfluorinated alkyl having 1 to 8 carbon atoms; perfluorinated cyclics having 1 to 8 carbon atoms; and, partially or fully fluorinated alkyl, alkenyl, ether or ester groups attached to backbone silicon atoms. The presence of moieties partially compatible with fluorosilicones such as silanol and vinyl are desirable.

The silicone gum can be incorporated in the solvent-resistant pressure sensitive adhesive herein at a level of from about 33 to about 75 wt.% of the total composition, on a solids basis.

Typical fillers suitable for addition to the solvent-resistant PSA compositions of this invention include fumed silica, precipitated silica and calcium carbonates. Treated calcium carbonates having particle sizes from about 0.07µ to about 4µ are particularly useful and are available under several trade names: Ultra Pflex, Super Pflex, Hi Pflex from Specialty in Minerals; Winnofil SPM, SPT from Zeneca Resins; Hubercarb lat, Hubercarb 3Qt and Hubercarb W from Huber and Kotomite from ECC. These fillers can be used either alone or in combination. The fillers can comprise up to about 200 parts per 100 parts of the fluoroalkylsilylated MQ resin component with from about 80 to about 150 parts filler per 100 parts of the fluoroalkylsilylated MQ resin being especially suitable for most adhesive applications.

Silane adhesion promoters can be employed at levels of from about 0.5 to about 5 parts per hundred parts of the fluoroalkylsilylated MQ resin, and advantageously from about 0.8 to about 1.5 parts per hundred parts fluoroalkylsilylated MQ resin. Suitable adhesion promoters include the silanes Silquest A-1120, Silquest A-2120, Silquest A-1170 and Silquest A-187, all of which are available from GE Silicones.

Exemplary plasticizers include phthalates, dipropylene and diethylene glycol dibenzoates and mixtures thereof, epoxidized soybean oil, and the like. Dioctyl and diisodecylphthalate are commercially available under the trade names Jayflex DOP and JayFlex DIDP from Exxon Chemical. The dibenzoates are available as Benzoflex 9-88, Benzoflex 50 and Benzoflex 400 from Velsicol Chemical Corporation. Epoxidized soybean oil is available from Houghton Chemical Corporation as Flexol EPO. The plasticizer can comprise up to about 100 parts of the fluoroalkylsilylated MQ resin and fluorosilicone gum combination, and advantageously from about 40 to about 80 parts per hundred parts of such combination being satisfactory in many cases.

Useful solvents include aromatic, aliphatic, halogenated, and ester solvents ranging in amounts of from about 25 to about 75 parts per hundred parts by weight of the fluoroallrylsilylated MQ resin and fluorosilicone gum combination.

Illustrative of useful thixotropic agents are various castor waxes, fumed silica, treated clays and polyamides. These additives typically comprise about 1 to about 10 parts per hundred parts of total fluoroalkylsilylated MQ resin and fluorosilicone gum combination with from about 1 to about 6 parts being useful for most applications. The thixotropes include those available as: Aerosil from Degussa, Cabo-Sil TS 720 from Cabot, Castorwax from CasChem, Thixatrol and Thixcin from Rheox and Dislon from King Industries. If the thixotrope is reactive with silane (e.g., silica), adjustments to the amount formulated may be needed to compensate therefor.

U. V. stabilizers and/or antioxidants can be incorporated into the pressure sensitive adhesive compositions of this invention in an amount of from 0 to about 5 parts per hundred parts fluoroalkylsilylated MQ resin and fluorosilicone gum combination with from about 0.5 to about 2 parts providing generally good results. These materials are available from Ciba-Geigy under the trade names Tinuvin 770, Tinuvin 327, Tinuvin 213, Tinuvin 622 and Irganox 1010.

After mixing, the PSA composition herein containing a conventional peroxide curing catalyst such as benzoyl peroxide (BPO) is cured by exposure to heat in order to drive off solvent and effect crosslinking. Curing conditions typically include several minutes exposure to ambient or warm conditions to remove solvent followed by several minutes exposure to oven conditions, typically 150 - 250 °C, to effect decomposition of the BPO or other peroxide curing catalyst and initiate free radical crosslinking of the PSA composition.

The adhesive release force, of the laminates and pressure sensitive products of the present invention, is generally defined as the force required to peel the pressure-sensitive adhesive at a specified rate and angle from a release-coated surface. In the Examples disclosed herein below, the release force is determined using a 180 Degree Peel Adhesion Test (PSTC-101, 13th Edition). This test measures the peeling force necessary to remove a pressure-sensitive adhesive from a substrate when the peel load acts in a direction perpendicular to the applied adhesive.

In this test, pressure-sensitive adhesive strips are pressed into a release coated surface, and after aging, the release force is measured when the adhesive strips are peeled at a 90° angle at a speed of 4,7 and 118 cm (12 and 300 inches) per minute. The instrument used is a release and adhesion tester available from Testing Machines Inc. under the designation TMI Model No. 80-90.02-0003 . The release force is expressed in grams/cm (grams/cm) width.

Objects and advantages of this invention are further illustrated by the following examples, but the particular materials and amounts thereof recited in these examples, as well as other conditions and details, should not be construed to unduly limit this invention. All amounts listed in the tape preparations and examples are by weight unless otherwise specified.

The following examples are illustrative of the laminates employing pressure sensitive adhesives which display easy release of the label/adhesive lamina or tape/adhesive lamina from the liner without denigration of the adhesive properties of the fluorosilicone PSA.

Fluorosilicone gums were prepared by prior art at different mole% methyltrifluoropropylsiloxy units with dimethylsiloxy units. In the examples below the mole% methyltrifluoropropylsiloxy of these copolymers are provided. All copolymers were silanol terminated.

Resins were prepared by reaction under acid catalysis, (hydrochloric acid) with the silane disclosed in the examples by refluxing a toluene solution of resin containing approximately 2 wt% silanol functionality. As the reaction proceeded the fluorosilane/resin precipitated from the toluene solution and was isolated, dried at approximately 100-120 °C in a vacuum oven.

### PSA/PET Example 1

PSA/PET Example 1 was prepared with an uncoupled PSA blend from the following solution:
2.4 g 50 mole% methyltrifluoropropylsiloxy
4.8 g 20 mole% methyltrifluoropropylsiloxy
3.6 g 3,3,3-trifluoropropyltrimethoxysilane-treated MQ resin
25 g trifluorotoluene solvent (available from Sigma-Aldrich)
0.11 g benzoyl peroxide (BPO, 1% w/w) (available from Sigma-Aldrich)

PSA/PET Example 1 with resin to gum ratio of 0.5 was prepared by coating the PSA with a resin to gum ratio of 0.5 on 2 sheets of 50,8 µm (2 mil) PET substrate as a 254 nm (10 mil) wet coating, solvent removal and cure was by 5 minutes at 75°C followed by 10 minute at 177°C. This coating proved to 76,2 nm (3 mil) adhesive build after cure. A one inch strip of the PSA coated PET of PSA/PET Example 1 was affixed to a stainless steel panel and allowed to set for an hour at ambient conditions. The force required to peel PSA/PET Example 1 adhesive lamina from the stainless steel panel at 4,7 cm (12 inches) per minute, 180° angle was 232 g/cm (589 g/in).

### Conventional Release Coated PET Example 1

Conventional Release Coated PET Example 1 consists of a conventional adhesive silicone release coated PET substrate prepared from the following formulated coating:

| | |
|---|---|
| SL6625¹ | 20 parts |
| SS4300c² | 0.66 parts |
| Hexane | 80 parts |

| | |
|---|---|
| ¹ GE Advanced Material-Silicones: SL6625 is a vinyl terminated polydimethylsiloxane /inhibitor/platinum catalyst. ² SS4300c is a trimethylsiloxy terminated methylhydrogen-polysiloxane. | |

A #10 Meyer rod was used to apply the release coating on PET. The solvent was removed and the coating cured at 120°C for 30 seconds dwell time in a forced air oven to furnish approximately 1.5 g/m² coat weight adhesive silicone release coating on the PET liner.

### Conventional Release Coated PET Example 2

Conventional Release Coated PET Example 2 consists of a conventional adhesive silicone release coated PET substrate prepared from the following formulated coating:

| | |
|---|---|
| FSR2000³ | 20 parts |
| SS4300c² | 0.8 parts |
| Hexane | 80 parts |

| | |
|---|---|
| ³ Vinyl terminated methyltrifluoropropyldimethylpolysiloxane release coating available from GE Advanced Material-Silicones. | |

A #10 Meyer rod was used to apply the release coating on PET. The solvent was removed and the coating cured at 120°C for 30 seconds dwell time in a forced air oven to furnish approximately 1.5 g/m² coat weight adhesive silicone release coating on the PET liner.

### Laminate Example 1

Laminate Example 1 was prepared with a PET sheet bearing the fluorosilicone PSA of PSA/PET Example 1 affixed to the PET liner prepared with the conventional silicone release coating of Conventional Release Coat Example 1 and then laminated under nip pressure of a laboratory laminator to furnish a pressure-sensitive article consisting of PSA coated PET of Example 1 and the conventional silicone release coated PET of Conventional Release Coat Example 1.

### Laminate Comparative Example 1

Laminate Comparative Example 1 was prepared by lamination of the FSR2000³ coated PET liner of Conventional Release Coat Example 2 with the PET-coated fluorosilicone PSA of PSA/PET Example 1.

One inch wide strips were cut from each construction of Laminate Example 1 and Laminate Comparative Example 2 and set aside for a day at ambient conditions. Release of the lamina prepared in Laminate Example 1 and Laminate Comparative Example 1 was recorded at a peel speed of 762 cm/min (300 inch/min) at 180 degree angle using the TMI tester. Release was tested periodically as the tapes were aged at ambient condition, with the results of Laminate Example 1 displayed in Table 1.

**TABLE 1 .**

| | |
|---|---|
| 1 day: | 53 g/cm (135 g/in) |
| 1 week: | 42,5 g/cm (108 g/in) |
| 2 week: | 40 g/cm (101 g/in) |
| 1 month: | 33 g/cm (83.9 g/in) |

Peel delamination of Laminate Example 1 occurred with complete adhesive failure, i.e., no PSA adhered to the release surface after peel.

By comparison, all attempts to determine release of Laminate Comparative Example 1 failed, regardless of peel speed. The fluorosilicone PSA composition prepared in PSA/PET Example 1 would not release from the fluorosilicone coated release liner of Conventional Release Coat Example 2

### PSA/PET Example 2

A coupled fluorosilicone PSA with resin to gum ratio of 0.5 for PSA/PET Example 2 was prepared from the following ingredients:

| | |
|---|---|
| 30 mole% methyltrilluoropropylsiloxy gum | 163.5 g |
| trifluoropropyltrimethoxysilane treated MQ resin | 81.9 g |
| trifluorotoluene (TFT) | 200.6 g |
| 10% NaOH solution in water | 0.15 g |
| 10% Phosphoric acid solution in water | 0.20 g |

Trifluorotoluene, NaOH solution, resin, and fluorosilicone gum were charged to a clean PSA reaction vessel equipped with a Dean-Stark trap. The trap was filled with trifluorotoluene as the reaction mixture was agitated for an hour under dry nitrogen, then refluxed at 115 °C for two hours. A small amount of aqueous layer was removed in the trap. Phosphoric acid was added, the mixture agitated for 30 minutes to yield a viscous solution that tested at 54.7% solids per weight loss at 150°C for 45 minutes oven time.

The PSA of PSA/PET Example 2 was applied to a 50,8 µm (2 mil) PET substrate as a 2 mil wet build using a Gardner applicator at 30% solids with 1 % BPO catalyst (w/w) added. Removal of solvent and cure was at 75°C for 5 minutes followed by 10 minutes cure at 177°C. A 20,3 µm (0.8 mil) coating of PSA was obtained on PET to form PSA/PET Example 2 in similar fashion to PSA/PET Example 1.

A 1 inch strip of cured PSA/PET Example 2 was affixed to a stainless steel panel for an hour, and the peel adhesion of the tape from the panel measured at 4,7 cm (12 inches) per minute 180° angle was 156 g/cm (397 g/in) peel force.

### Conventional Release Coated PET Example 3

Conventional Release Coated PET Example 3 consists of a branched conventional adhesive silicone release coated PET substrates prepared from the following formulated coating:

| | |
|---|---|
| SL 7025⁴ | 20 parts |
| SS4300c² | 0.8 parts |
| Hexane | 80 parts |

| | |
|---|---|
| ⁴ Vinyl-terminated branched polydimethylsiloxane available from GE Advanced Material-Silicones. | |

A #10 Meyer rod was used to apply the release coating on PET. The solvent was removed and the coating cured at 120°C for 30 seconds dwell time in a forced air oven to furnish approximately 1.5 g/m² coat weight adhesive silicone release coating on the PET liner.

### Laminate Example 2

Laminate Example 2 was prepared by laminating PSA/PET Example 2 and Convention Release Coated PET Example 3 as described in Laminate Example 1, *supra*, to provide a laminate construction. One inch strips were cut from Laminate Example 2 and its release was recorded at a peel speed of 762 cm/min (300 inch/min) 180° angle. Release was then tested periodically as the tapes were aged at ambient condition, with the results displayed in Table 2.

**TABLE 2**

| | |
|---|---|
| 1 day: | 13 g/cm (34.2 g/in) |
| 7 day: | 15 g/cm (39.2 g/in) |
| 14 days: | 17 g/cm (42.9 g/in) |
| 30 days: | 14 g/cm (35.7 g/in) |

### PSA/PET Example 3

PSA/PET Example 3 was prepared as described in PSA/PET Example 2, above, except that a 20 mole% methyltrifluoropropylsiloxy gum, was substituted for the 30 mole% methyltrifluoropropylsiloxy gum. A viscous hazy solution, 54.7% silicone solids, was obtained. The fluorosilicone PSA composition was diluted to 30% solids in TFT, mixed with 1 % (w/w) benzoyl peroxide (BPO) and applied to 50,8 µm (2 mil) PET using a Gardner applicator to provide an 203 µm (8 mil) wet build. Removal of solvent and cure by 5 minute exposure to 75°C then 10 minute exposure to 177°C resulted in a tacky 48 µm (1.9 mil) thick adhesive deposit. Peel adhesion of a one-inch strip of PSA/PET Example 3 from a stainless steel panel at 4,7 cm (12 inches) per minute 180° angle was recorded at a force of 173 g/cm (440 g/in.)

### Laminate Example 3

Laminate Example 3 was prepared by laminating PSA/PET Example 3 and Conventional Release Coated PET Example 1 as described herein above. The laminate construction of Laminate Example 3 was set aside at ambient conditions. One inch tapes were cut from the construction at periodic intervals, and the force required to peel the Conventional Release Coated PET Example 1 liner from the adhesive PSA/PET Example 3 was recorded at a 762 cm (300 inches) per minute 180° angle. Results obtained are displayed in Table 3.

**TABLE 3**

| | |
|---|---|
| 1 day: | 159 g/cm (404 g/in) |
| 12 days: | 123 g/cm (313 g/in) |
| 30 days: | 129 g/cm (327 g/in) |

The release results observed in Laminate Example 3 were clean (no adhesive residue on the liner) in each case. After the 12^{th} day aged peel was measured.

A 2,5×15 cm (1-inch by 6-inch) tape from Laminate Example 3 was removed from the liner then affixed to a stainless steel panel followed by a one hour dwell. The peel adhesion of the strip from the panel was measured at a 30 cm (12 inches) per minute 180° angle. The peel adhesion result was 223 g/cm (566 g/in) in this case. Subsequent adhesion measured was greater than 100% (566/440) demonstrating no loss in peel adhesion when exposed to a release liner.

### PSA/PET Example 4

PSA/PET Example 4 was prepared in the same way as PSA/PET Example 3 described above, except that a 50/50 (weight) mixture of 20 mole% methyltrifluoropropylsiloxy and 30 mole% methyltrifluoropropylsilicone gums were used in place of 100% of the 20 or 30 mole% fluorogum. A viscous hazy solution, 54.3% silicone solids, was recovered as the product. The fluorosilicone PSA was diluted to 30% in TFT solvent, coated, and cured on 50,8 µm (2 mil) PET as described above, using 1 wt% BPO catalyst to furnish a 0 µm and 43 µm (0.8 mil and 1.7 mil) thickness of tacky adhesive on the PET substrate. 2,54 cm (1 inch) wide strips of the PSA adhesive-coated PET were applied to stainless steel panels, and allowed to set at ambient conditions for 2 hours. The force required to peel PSA/PET Example 4 from the steel panel at 30 cm (12 inches) per minute 180° angle was recorded with the results displayed in Table 4.

**TABLE4**

| | |
|---|---|
| 20 µm : | 264 g/cm (0.8 mil: 671 g/in) |
| 43 µm : | 248 g/cm (1.7 mil: 631 g/in) |

In each test of PSA/PET Example 4, a clean adhesive failure was observed with no adhesive residue remaining on the steel.

### Laminate Example 4

Laminate Example 4 was prepared by laminating PSA/PET Example 4 with Conventional Release Coated PET Example 1 as previously described. The force required to peel Conventional Release Coated PET Example 1 liner from PSA/PET Example 4 adhesive at 762 cm/min (300 ipm) peel speed was then recorded as a function of time following the lamination, with the results displayed in Table 5.

**TABLE 5**

| | |
|---|---|
| 1 day aged: | 87 g/cm (222 g/in) |
| 18 days aged: | 52 g/cm (133 g/in) |
| 45 days aged: | 66 g/cm (168 g/in) |

### PSA/PET Example 5

The coupled fluorosilicone PSA with resin to gum ratio of 0.75 for PSA/PET Example 5 was prepared as follows:

| | |
|---|---|
| 10 mole% methyltrifluoropropylsiloxy gum | 163.6 g |
| trifluoropropyltrimethoxysilane-treated MQ resin | 122.7 g |
| trifluorotoluene (TFT) | 234 g |
| 10% NaOH solution in water | 0.17 g |
| 10% Phosphoric acid solution in water | 0.22 g |

Trifluorotoluene, NaOH solution, resin, and fluorosilicone gum were charged to a clean PSA reaction vessel equipped with Dean Stark trap and reflux column. The trap was filled with TFT solvent as the reaction mix was refluxed for 2 hours under dry nitrogen. A small amount of aqueous phase was removed from the trap. Phosphoric acid solution was added, and the mix agitated for 30 minutes to yield a viscous solution, 52.3% solids per 150°C weight loss on 45 minutes oven exposure.

PSA/PET Example 5 based on the 10 mole% methyltrifluoropropylsiloxy gum was adjusted to 30% solids in TFT, 1% (w/w) BPO curing catalyst added, then applied to 50,8 µm (2 mil) PET substrate as 76,2 µm (3 mil) (wet) thick coatings using a Gardner Applicator. Solvent removal and cure was affected by 5 minutes oven exposure at 75 °C followed by 10 minutes oven exposure at 117 °C. One inch strips of the cured adhesives on PSA/PET Example 5 were prepared and affixed to clean stainless steel panels as previously described, and the peel adhesion measured at 30 cm (12 inches) per minute 180° angle was 115 g/cm (292 g/in.)

### PSA/PET Example 6

The coupled fluorosilicone PSA with resin to gum ratio of 1.29 for PSA/PET Example 6 was prepared in the same fashion as PSA/PET Example 5 as follows:

| | |
|---|---|
| 10 mole% methyltrifluoropropylsiloxy gum | 70 g |
| trifluoropropyltrimethoxysilane-treated MQ resin | 90 g |
| trifluorotoluene (TFT) | 240 g |
| 10% NaOH solution in water | 0.15 g |
| 10% phosphoric acid solution in water | 0.20 g |

The final product was a viscous solution, 12600 cps viscosity, solids content = 45.2%.

PSA/PET Example 6 based on the 10 mole% methyltrifluoropropylsiloxy gum was adjusted to 30% solids in TFT, 1 % (w/w) BPO curing catalyst added, then applied to 50,8 µm (2 mil) PET substrate as 3 mil (wet) thick coatings using a Gardner Applicator. Solvent removal and cure was affected by 5 minutes oven exposure at 75 °C followed by 10 minutes oven exposure at 177 °C. One inch strip of the cured adhesives on PSA/PET Example 6 was prepared and affixed to clean stainless steel panels as previously described, and the peel adhesion measured at 30 cm (12 inches) per minute 180° angle was 190 g/cm (482 g/in.)

The coated and cured PSAs of PSA/PET Examples 5 and 6 were laminated to various release liners using a 276 kPa (40 psi) laboratory lamination device. 2,54 cm (One inch) wide tapes were cut from these laminates and the peel release of the liner from the fluorosilicone PSA/PET lamina was measured at 30 cm (12 inches) per minute an 762 cm (300 inches) per minute both at 180° angle at certain intervals as the laminates were aged at room temperature under weights. The results are displayed in Table 6.

**TABLE 6**

| Liner | Flourosilicone PSA | PSA Thickness | Release, Speed | Laminate Age, RT |
|---|---|---|---|---|
| Conventional Release Coated PET Example 3 | PSA/PET Example 5 | 25,4 µm (1 mil) | 169 g/cm (428 g/in), 762 cm/min (300 ipm) | 1 day |
| | | | 111 (282) | 7 days |
| | | | 168 (426) | 15 days |
| Conventional Release Coated PET Example 1 | PSA/PET Example 5 | 25,4 µm (1 mil) | 112 g/cm (285 g/in), 30 cm/min (12 ipm) | 1 day |
| | | | 106 (269) | 6 days |
| | | | 84 (213) | 14 days |
| | | | 116 g/cm (295 g/in)*, 762 cm/min (300 ipm) | 1 day |
| | | | 237 g/cm (601 g/in)*. 762 cm/min (300 ipm) | 14 days |
| Conventional Release Coated polykraft with UV9400^{a} | PSA/PET Example 5 | 25,4 µm (1 mil) | >354 g/cm (>900 g/in)*, 762 cm/min (300 ipm) | 1 day |
| | | | 183 g/cm (465 g/in), 30 cm/min (12 ipm) | 15 days |
| Conventional Release Coated PET Example 3 | PSA/PET Example 6 | 25,4 µm (1 mil) | 78 g/cm (199 g/in), 30 cm/min (12 ipm) | 1 day |
| | | | 160 g/cm (406 g/in), 762 cm/min (300 ipm) | 1 day |
| | | | 185 g/cm (469 g/in), 762 cm/min (300 ipm) | 11 days |

| | | | | |
|---|---|---|---|---|
| (RT = Room Temperature) UV9400 is a U.V. curable epoxysilicone release coating and UV9385c an iodonium photocatalyst available from GE Advanced Materials. A release coating was prepared from a mixture of: UV9400^{a} 90 parts UV9385c 1.5 parts Release coating was applied using a five roll coater to a polykraft (PK) substrate then photocured by exposure to Fusion Systems' H lamps. * indicates partial or complete *cohesive* failure during release (otherwise noted as complete adhesive failure and complete release of the adhesive). Cohesive failure is undesirable, as it results in some or the entire adhesive transferring to the liner. | | | | |

The following Examples (Laminate Examples 5-8) were prepared to demonstrate conventional controlled release additives (CRA's) on release of thermal cure silicone liners from the fluorosilicone PSA of PSA/PET Example 4. PSA/PET Example 4 was prepared as described above. 25,4 µm (1 mil) of cured fluorosilicone PSA of PSA/PET Example 4 was deposited on the PET facestock after solvent removal and cure as described above.

PSA/PET Example 4 sheets were laminated to several different silicone release coatings applied and cured on 50,8 µm (2 mil) PET, as previously described above. The silicone release coatings formulations for the silicone release coatings that were applied to the PET liners of Laminate Examples 5-8 are presented in Table 7. The silicone release coating consisted of blends of SL6625¹ and SL6635⁵ CRA with a typical crosslinker SS4300c¹ and SiH/Vi ratio of 2.5. Release of the lamina from the release liners was recorded as a function of peel speed and laminate aging at room temperature. Results of the release of lamina from various liners are displayed in Table 8.

**TABLE 7**

| Formulation Number | SL6625¹ | SL6635⁵ | SS4300c¹ |
|---|---|---|---|
| Silicone release coating blend of Liner of Laminate Example 5 | 95 pts | 5 pts | 5.3 pts |
| Silicone release coating blend of Liner of Laminate Example 6 | 87.5 pts | 12.5 pts | 5.8 pts |
| Silicone release coating blend of Liner of Laminate Example 7 | 80 pts | 20 pts | 6.7 pts |
| Silicone release coating blend of Liner of Laminate Example 8 | 60 pts | 40 pts | 9.3 pts |

| | | | |
|---|---|---|---|
| ⁵ SL6635 is a vinyl-terminated polydimethylsiloxane/silicone resin composition of prior art available from GE Advance Materials as a control release additive to facilitate increase peel adhesion force during delaminating. | | | |

**TABLE 8**

| Liner | Laminate Age | Peel Speed | Release | Observations |
|---|---|---|---|---|
| Conventional Release Coated PET Example 1 Laminated to PSA/PET Example 4 (i.e., Laminate Example 4) | 1 day | 762 cm/min (300 ipm) | 42 g/cm (108 g/in) | 100 % adhesive failure |
| | 6 days | | 29 (74.9) | |
| | 14 days | | 54 (138) | |
| | 26 days | | 45 (115) | |
| Laminate Example 5 | 1 day | 762 cm/min (300 ipm) | 34 (86.4) | 100 % adhesive failure |
| | 6 days | | 30 (77.6) | |
| | 14 days | | 39(100) | |
| | 26 days | | 39 (99.5) | |
| Laminate Example 6 | 1 day | 762 cm/min (300 ipm) | 44 (113) | 100 % adhesive failure |
| | 6 days | | 44(113) | |
| | 14 days | | 89 (226) | ~20% cohesive failure |
| | 26 days | | 50 (128) | 100 % adhesive failure |
| Laminate Example 7 | 1 day | 762 cm/min (300 ipm) | >197 (>500) | cohesive failure |
| | | 30 cm/min (12 ipm) | 318 (809) | cohesive failure |
| | 9 days | 762 cm/min (300 ipm) | 124 (316) | ~40% cohesive failure |
| | 17 days | 762 cm/min (300 ipm) | 198 (504) | ~40% cohesive failure |
| | 29 days | 762 cm/min (300 ipm) | 170 (433) | ~25% cohesive failure |
| Laminate Example 8 | 1 day | 30 cm/min (12 ipm) | No release | |
| | 9 days | 762 cm/min (300 ipm) | 85 (217) | ~50% cohesive failure |
| | 17 days | 762 cm/min (300 ipm) | ~197(~500) | ~10% cohesive failure |
| | 29 days | 762 cm/min (300 ipm) | 181 (460) | ~40% cohesive failure |

Controlled release liners and fluorosilicone PSA lamina such as shown above demonstrate that a small release differential is achieved at low concentrations of conventional controlled release additive (CRA) in release coating formulations. Above which, there is cohesive failure indicative of "lock-up" with inconsistent, albeit tight, release observed. The release coatings with the highest CRA content demonstrated failure to adhesively release as noted by the cohesive failure displayed in Table 9 above.

Both the coupled (i.e., condensation of the fluorosilicone gums with the fluoroalkylsilylated MQ resins) PSA materials and uncoupled blends (i.e., uncured resinous composition) of the same inputs, when combined with peroxide catalysts such as benzoyl peroxide (BPO), are readily applied to film substrates and crosslinked into useful PSA compositions. The resulting adhesive coatings, when laminated to silicone release liners, can be readily removed from the liners without loss of adhesive properties. Release has been shown to be consistent and stable as particularly displayed in Laminate Examples 1-4 and the Examples presented in Tables 7 and 9. As such, the instant invention demonstrates that pressure sensitive products, i.e., laminates, comprising fluorosilicone PSA can be releasably adhered to conventional silicone release liners. Release of the fluorosilicone PSA's from the liners tested herein, appear to be stable, or decreasing with laminate age. Further in this regard, release appears to be inversely related to fluoro content of the PSA, that is, higher methyltrifluoropropylsiloxy content of the gum component of the PSA leads to lower release.

## Claims

1. A laminate comprising a face stock possessing a pressure sensitive adhesive layer comprising:
(i) a fluorosilicone gum; and
(ii) a fluoroalkylsilylated MQ resin;
wherein said pressure sensitive adhesive is releasably adhered to a release liner possessing a silicone release coating, and
wherein the face stock is at least one selected from the group consisting of polyimide, polyester, polyvinylchloride, and polyolefin.

2. The laminate of claim 1, wherein the pressure sensitive adhesive layer further comprises at least one additional component selected from the group consisting of filler, silane adhesion promoter, plasticizer, solvent, thixotropic agent, UV stabilizer, curing catalyst and antioxidant.

3. The laminate of Claim 1 or 2, wherein the fluorosilicone gum is a polydimethylsiloxane possessing at least one fluoroalkyl-methyl siloxane unit.

4. The laminate of any one of the preceding claims, wherein the fluorosilicone gums has a viscosity of at least 5000 cps at 25°C.

5. The laminate of any one of the preceding claims, wherein the fluoroalkylsilylated MQ resin is obtained by the process which comprises reacting silanol-containing MQ resin with a fluoroalkylsilane.

6. The laminate of any one of the preceding claims wherein the fluoroalkylsilylated MQ resin is a fluoroalkylsilylated MO^{Vi}Q resin, preferably obtained by the process which comprises reacting silanol-containing MD^{Vi}Q resin with a fluoroalkylsilane.

7. The laminate of claims 5 or 6 wherein the fluoroalkylsilane is of the general formula:
R¹R^{z}Si(R³)ᵣR⁴₍₃₋ᵣ₎
where
R¹ is a partly or totally fluorinated alkyl group of up to 26 carbon atoms, R² is a chemically stable divalent bridging group linking fluoroalkyl group R¹ with Si, and
R³ is alkyl of from 1 to 6 carbon atoms or aryl of from 6 to 8 carbon atoms, and
R⁴ is an alkoxy or halogen, and
r is 0, 1 or 2.

8. The laminate of Claim 7 wherein R² is
the group -(CH2)n- in which n is 2 to 20,
the group -(CH₂)ₙ-x-(CH₂)ₚ- in which x is -O- or -C(O)O-, n is 0 to 2 and p is 5 to 25, or
the group -Q-S-(CH₂)_{q}- in which Q is a divalent group containing at least one oxygen atom and q is 2 or 3.

9. The laminate of Claim 8 wherein the fluoroalkylsilane is selected from the group consisting of 3,3,3-trifluoropropyltrimethoxy-silane, 3,3,3-trifluoropropyltriethoxysilane, 3,3,3-trifluoropropylmethyldimethoxysilane, 3,3,3-trifluoropropyldimethylmethoxysilane, 4,4,4-trifluorobutyltrimethoxysilane, 4,4,4-trifluorobutyltriethoxysilane, 3,3,4,4,4-pentafluorobutyltrimethoxysilane, 3,3,4,4,4-petafluorobutyltriethoxysilane, 3,3,4,4,5,5,6,6,7,7,8,8,8-tridecafluorooctyltrimethoxysilane, 3,3,4,4,5,5,6,6,7,7,8,8,8-tridecafluorooctyltriethoxysilane, 3,3,4,4,5,5,6,6,7,7,8,8,9,9,10,10,10-heptadecafluorodecyltrimethoxysilane, 3,3,4,4,5,5,6,6,7,7,8,8,9,9,10,10,10-heptadecafluorodecyltriethoxysilane, 15-(trifluoroethoxy)pentadecyltrimethoxysilane and 15-(trifluoroacetoxy)pentadecylmethyldiethoxysilane, 3,3,3-trifluoropropyldimethylchlorosilane, 3,3,3-trifluoropropylmethyldichlorosilane, 3,3,3-trifluorpropyltrichlorosilane and mixture thereof.

10. The laminate of any one of the preceding claims wherein the release liner is prepared from at least one from the group consisting of polyolefin, polyester, polyvinyl chloride, polyvinyl fluoride (PVF), and polyvinylidene difluoride (PVDF).

11. The laminate of any one of the preceding claims wherein the silicone release coating is prepared from a polyorganosiloxane, preferably a polydimethylsiloxane.

12. The laminate of any one of the preceding claims wherein the silicone release coating is cured.

13. An adhesive article comprising a face stock and a pressure sensitive adhesive layer comprising:
(i) a fluorosilicone gum; and
(ii) a fluoroalkylsilylated MQ resin;
disposed on at least one major surface thereof, wherein the face stock is at least one selected from the group consisting of polyimide, polyester, polyvinylchloride, and polyolefin.

## Patentansprüche

1. Laminat, welches ein Obermaterial umfasst, das eine druckempfindliche Klebstoffschicht besitzt, umfassend:
(i) einen Fluorsilikongummi; und
(ii) ein fluoralkylsilyliertes MQ-Harz;
wobei der druckempfindliche Klebstoff lösbar an einem Trennpapier haftet, das eine Silikontrennbeschichtung besitzt, und
wobei das Obermaterial mindestens eines gewählt aus der Gruppe bestehend aus Polyimid, Polyester, Polyvinylchlorid und Polyolefin ist.

2. Laminat nach Anspruch 1, **dadurch gekennzeichnet, dass** die druckempfindliche Klebstoffschicht weiterhin mindestens eine zusätzliche Komponente gewählt aus der Gruppe bestehend aus Füllstoff, Silanadhäsionsbeschleuniger, Weichmacher, Lösungsmittel, Thixotropiermittel, UV-Stabilisator, Härtungskatalysator und Antioxidans umfasst.

3. Laminat nach Anspruch 1 oder 2, **dadurch gekennzeichnet, dass** der Fluorsilikongummi ein Polydimethylsiloxan ist, das mindestens eine Fluoralkylmethylsiloxaneinheit besitzt.

4. Laminat nach einem der vorhergehenden Ansprüche, **dadurch gekennzeichnet, dass** der Fluorsilikongummi eine Viskosität von mindestens 5000 cps bei 25°C aufweist.

5. Laminat nach einem der vorhergehenden Ansprüche, **dadurch gekennzeichnet, dass** das fluoralkylsilylierte MQ-Harz durch den Prozess erhalten wird, der das Regieren von silanolhaltigem MQ-Harz mit einem Fluoralkylsilan umfasst.

6. Laminat nach einem der vorhergehenden Ansprüche, **dadurch gekennzeichnet, dass** das fluoralkylsilylierte MQ-Harz ein fluoralkylsilyliertes MD^{Vi}Q-Harz ist, das vorzugsweise durch den Prozess erhalten wird, der das Reagieren von silanolhaltigem MD^{Vi}Q-Harz mit einem Fluoralkylsilan umfasst.

7. Laminat nach Anspruch 5 oder 6, **dadurch gekennzeichnet, dass** das Fluoralkylsilan von folgender allgemeiner Formel ist:
R¹R²Si(R³)ᵣR⁴₍₃₋ᵣ₎
wobei
R¹ eine teilweise oder ganz fluorierte Alkylgruppe von bis zu 26 Kohlenstoffatomen ist,
R² eine chemisch stabile bivalente Überbrückungsgruppe ist, die die Fluoralkylgruppe R¹ mit Si verbindet und
R³ Alkyl mit 1 bis 6 Kohlenstoffatomen oder Aryl mit 6 bis 8 Kohlenstoffatomen ist und
R⁴ ein Alkoxy oder Halogen ist und
r 0, 1 oder 2 ist.

8. Laminat nach Anspruch 7, **dadurch gekennzeichnet, dass** R² ist:
die Gruppe -(CH2)n-, bei der n 2 bis 20 ist,
die Gruppe -(CH₂)ₙ-x-(CH₂)ₚ-, bei der x -O- oder -C(O)O- ist, n 0 bis 2 ist und p 5 bis 25 ist, oder
die Gruppe -Q-S-(CH₂)_{q}-, bei der Q eine bivalente Gruppe ist, die mindestens ein Sauerstoffatom enthält, und q 2 oder 3 ist.

9. Laminat nach Anspruch 8, **dadurch gekennzeichnet, dass** das Fluoralkylsilan gewählt ist aus der Gruppe bestehend aus 3,3,3-Trifluorpropyltrimethoxysilan, 3,3,3-Trifluorpropyltriethoxysilan, 3,3,3-Trifluorpropylmethyldimethoxysilan, 3,3,3-Trifluorpropyldimethylmethoxysilan, 4,4,4-Trifluorbutyltrimethoxysilan, 4,4,4-Trifluorbutyltriethoxysilan, 3,3,4,4,4-Pentafluorbutyltrimethoxysilan, 3,3,4,4,4-Pentafluorbutyltriethoxysilan, 3,3,4,4,5,5,6,6,7,7,8,8,8-Tridecafluoroctyltrimethoxysilan, 3,3,4,4,5,5,6,6,7,7,8,8,8-Tridecafluoroctyltriethoxysilan, 3,3,4,4,5,5,6,6,7,7,8,8,9,9,10,10,10-Heptadecafluordecyltrimethoxysilan, 3,3,4,4,5,5,6,6,7,7,8,8,9,9,10,10,10-Heptadecafluordecyltriethoxysilan, 15-(Trifluorethoxy)pentadecyltrimethoxysilan und 15-(Trifluoracetoxy)pentadecylmethyldiethoxysilan, 3,3,3-Trifluorpropyldimethylchlorsilan, 3,3,3-Trifluorpropylmethyldichlorsilan, 3,3,3-Trifluorpropyltrichlorsilan und einer Mischung davon.

10. Laminat nach einem der vorhergehenden Ansprüche, **dadurch gekennzeichnet, dass** das Trennpapier aus mindestens einem aus der Gruppe bestehend aus Polyolefin, Polyester, Polyvinylchlorid, Polyvinylfluorid (PVF) und Polyvinylidendifluorid (PVDF) erzeugt ist.

11. Laminat nach einem der vorhergehenden Ansprüche, **dadurch gekennzeichnet, dass** die Silikontrennbeschichtung aus einem Polyorganosiloxan, vorzugsweise einem Polydimethylsiloxan, erzeugt ist.

12. Laminat nach einem der vorhergehenden Ansprüche, **dadurch gekennzeichnet, dass** die Silikontrennbeschichtung gehärtet ist.

13. Klebstofferzeugnis, welches ein Obermaterial und eine druckempfindliche Klebstoffschicht umfasst, umfassend:
(i) einen Fluorsilikongummi; und
(ii) ein fluoralkylsilyliertes MQ-Harz;
die auf mindestens einer Hauptfläche davon angeordnet sind, wobei das Obermaterial mindestens eines gewählt aus der Gruppe bestehend aus Polyimid, Polyester, Polyvinylchlorid und Polyolefin ist.

## Revendications

1. Laminé comprenant un matériel facial possédant une couche adhésive réagissant à la pression comprenant:
(i) une gomme de fluorosilicone; et
(ii) une résine MQ fluoroalkylsilylée;
où ledit adhésif réagissant à la pression adhère relâchablement à une pellicule séparable possédant un revêtement séparable en silicone, et
où le matériel facial est au moins un sélectionné dans le groupe consistant en polyimide, polyester, polyvinylchlorure et polyoléfine.

2. Laminé selon la revendication 1, dans lequel la couche adhésive réagissant à la pression comprend en outre au moins un composant additionnel sélectionné dans le groupe consistant en charge, promoteur d'adhérence du silane, plastifiant, solvant, agent thixotropique, stabilisateur UV, catalyseur de durcissement et antioxydant.

3. Laminé selon la revendication 1 ou 2, dans lequel la gomme de fluorosilicone est un polydiméthylsiloxane possédant au moins une unité de fluoroalkyl-méthyl siloxane.

4. Laminé selon l'une quelconque des revendications précédentes, dans lequel la gomme de fluorosilicone a une viscosité d'au moins 5000 cps à 25°C.

5. Laminé selon l'une quelconque des revendications précédentes, dans lequel la résine MQ fluoroalkylsilylée est obtenue par le procédé qui comprend la réaction de la résine MQ contenant du silanol avec un fluoroalkylsilane.

6. Laminé selon l'une quelconque des revendications précédentes, dans lequel la résine MQ fluoroakylsilylée est une résine MD^{VI}Q fluoroalkylsilylée, de préférence obtenue par le procédé qui comprend la réaction de la résine MD^{VI}Q contenant du silanol avec un fluoroalkylsilane.

7. Laminé selon les revendications 5 ou 6, dans lequel le fluoroalkylsilane a la formule générale:
R¹R²Si(R³)ᵣR⁴₍₃₋ᵣ₎
où
R¹ est un groupe alkyle partiellement ou totalement fluoré jusqu'à 26 atomes de carbone,
R² est un groupe de pontage divalent chimiquement stable liant le groupe fluoroalkyle R¹ avec Si, et
R³ est alkyle de 1 à 6 atomes de carbone ou aryle de 6 à 8 atomes de carbone, et
R⁴ est un alcoxy ou halogène, et
r est 0, 1 ou 2.

8. Laminé selon la revendication 7, dans lequel R² est
le groupe -(CH2)n- dans lequel n est 2 à 20,
le groupe -(CH₂)ₙ-X-(CH₂)ₚ- dans lequel x est -O- ou -C(O)O-, n est 0 à 2 et p est 5 à 25, ou
le groupe -Q-S-(CH₂)_{q}- dans lequel Q est un groupe divalent contenant au moins un atome d'oxygène, et q est 2 ou 3.

9. Laminé selon la revendication 8, dans lequel le fluoroalkylsilane est sélectionné dans le groupe consistant en 3,3,3-trifluoropropyltriméthoxy-silane, 3,3,3-trifluoro-propyltriéthoxysilane, 3,3,3-trifluoropropylméthyldi-méthoxysilane, 3,3,3-trifluoropropyldiméthylméthoxysilane, 4,4,4-trifluorobutyltriméthoxysilane, 4,4,4-trifluorobutyl-triéthoxysilane, 3,3,4,4,4-pentafluorobutyltriméthoxy-silane, 3,3,4,4,4-pétafluorobutyltriéthoxysilane, 3,3,4,4,5,5,6,6,7,7,8,8,8-tridécafluorooctyltriméthoxy-silane, 3,3,4,4,5,5,6,6,7,7,8,8,8-tridécafluorooctyl-triéthoxysilane, 3,3,4,4,5,5,6,6,7,7,8,8,9,9,10,10,10-heptadécafluorodécyltriméthoxysilane, 3,3,4,4,5,5,6,6,7,7, 8,8,9,9,10,10,10-heptadécafluorodécyltriéthoxysilane, (trifluoroéthoxy)pentadécyltriméthoxysilane et 15-(trifluoroacétoxy)pentadécylméthyldiéthoxysilane, 3,3,3-trifluoropropyldimétylchlorosilane, 3,3,3-trifluoropropylméthyldichlorosilane, 3,3,3-trifluoropropyltrichlorosilane et des mélanges de ceux-ci.

10. Laminé selon l'une quelconque des revendications précédentes, dans lequel la pellicule séparable est préparée à partir d'au moins un du groupe consistant en polyoléfine, polyester, polyvinyl chlorure, polyvinyl fluorure (PVF) et polyvinylidène difluorure (PVDF).

11. Laminé selon l'une quelconque des revendications précédentes, dans lequel le revêtement séparable en silicone est préparé à partir d'un polyorganosiloxane, de préférence un polydiméhylsiloxane.

12. Laminé selon l'une quelconque des revendications précédentes, dans lequel le revêtement séparable en silicone est durci.

13. Article adhésif comprenant un matériel facial et une couche adhésive réagissant à la pression comprenant:
(i) une gomme de fluorosilicone; et
(ii) une résine MQ fluoroalkylsilylée;
disposée sur au moins une surface majeure de celle-ci, où le matériel facial est au moins sélectionné dans le groupe consistant en polyimide, polyester, polyvinylchlorure et polyoléfine.
